# FASCICULE DE BREVET EUROPEEN

(11) **EP 3 097 510 B1**
(45) Date de publication et mention de la délivrance du brevet: **12.12.2018**
(21) Numéro de dépôt: 15700774.1
(22) Date de dépôt: 23.01.2015
(51) Int. Cl.: G06K 7/08

(54) **TÊTE MAGNÉTIQUE POUR TERMINAL DE PAIEMENT**
MAGNETKOPF FÜR ZAHLUNGSTERMINAL
MAGNETIC HEAD FOR A PAYMENT TERMINAL

(30) Priorité: 24.01.2014 FR 1450633
(43) Date de publication de la demande: 30.11.2016
(73) Titulaire: Ingenico Group, 75015 Paris (FR)
(72) Inventeur: NACCACHE, David, F-75018 Paris (FR)
(74) Mandataire: Vidon Brevets & Stratégie
(86) Numéro de dépôt international: PCT/EP2015/051416
(87) Numéro de publication internationale: WO 2015/110610

(56) Documents cités:
- EP-A1- 2 405 427
- WO-A1-93/13498
- US-A1- 2004 000 416
- US-A1- 2011 192 903
- US-A1- 2014 021 255

## Description

### 1. Domaine de l'invention

L'invention se rapporte au domaine des terminaux de paiement. L'invention se rapporte plus particulièrement au domaine des terminaux de paiement comprenant des têtes de lecture magnétiques. De tels terminaux de paiement sont utilisés pour effectuer des lectures de données bancaires qui sont présentes sur une carte comprenant des pistes magnétiques.

### 2. Art antérieur

Les terminaux de paiement sont majoritairement utilisés pour permettre le règlement des achats de biens et de services au sein des points de vente. Ces terminaux comprennent généralement un lecteur de carte à puce et un lecteur de carte magnétique. Ils comprennent également un écran, permettant notamment de visualiser les montants des transactions et un clavier de saisie de ces mêmes montants ainsi que des codes confidentiels saisis par les clients, ou bien un écran tactile. Ces terminaux de paiement possèdent en général une batterie, leur permettant de fonctionner de manière autonome. Le lecteur de carte magnétique se représente généralement sous la forme d'une fente, pratiquée le long du terminal de paiement. Cette fente permet de faire glisser une carte magnétique, par exemple du haut vers le bas. Ce mouvement permet de faire lire le contenu de la bande magnétique de la carte magnétique. En effet, la bande magnétique passe devant une tête magnétique qui lit les informations enregistrées sur la bande magnétique de la carte.

Le terminal de paiement comprend donc une tête de lecture magnétique. Les cartes magnétiques compatibles avec la norme ISO 7811 comprennent une bande magnétique comprenant trois pistes d'enregistrement (généralement appelées piste ISO 1, ISO 2 et ISO 3). Ces pistes peuvent contenir des informations en relation avec son possesseur. Notamment, des informations relatives à un compte bancaire, et des données cryptées sont stockées sur de telles pistes.

L'utilisation de telles cartes magnétiques est très répandue dans le domaine bancaire, afin de réaliser des transactions chez des commerçants. Lors d'une telle transaction, la carte magnétique d'un client est insérée à l'extrémité d'une fente (dans laquelle l'extrémité d'une tête de lecture magnétique est présente, sur une des faces des parois formant la fente) dans un terminal de paiement, et un mouvement de translation de la carte est effectué (on fait coulisser la carte magnétique dans cette fente de sorte que la bande magnétique de la carte soit présentée en regard de l'extrémité de la tête de lecture magnétique). Ainsi, l'extrémité de la tête de lecture magnétique rentre en contact physique avec la piste magnétique de la carte magnétique, et elle mesure la polarisation de particules magnétiques sur des portions de la piste magnétique considérée (de par le mouvement de translation) et en déduit des informations binaires.

Lors du mouvement de translation de la carte magnétique dans la fente du terminal de paiement, une pression est exercée sur la tête de lecture magnétique par le coulissement de la carte magnétique. Ainsi, une tête de lecture doit être capable de se mouvoir perpendiculairement à l'axe de translation d'une carte dans la fente. De plus, le passage d'une carte dans la fente peut induire un léger gîte de la tête de lecture magnétique par rapport à l'axe perpendiculaire à l'axe de translation de la carte.

Afin de stabiliser la tête de lecture magnétique lors de la lecture d'une carte, il s'avère nécessaire d'utiliser un dispositif de maintien d'une telle tête (afin de limiter le gîte susmentionné, cette fonctionnalité étant nommée « guidage de la tête de lecture magnétique »), qui permet aussi, une fois la carte passée, de repositionner la tête de lecture magnétique à sa position d'origine (cette fonctionnalité étant nommée « retour ou un amortissement de la tête de lecture magnétique »).

Ainsi, on assure que la tête magnétique est positionnée au plus près de la piste magnétique à lire. En revanche, jusqu'à présent, le sujet de la sécurisation des données lues par la tête magnétique a été relativement peu traité. En effet, bien que les données présentes sur la carte magnétique soient généralement sécurisées et que la transmission de ces données au processeur de sécurisation du terminal fasse également l'objet de protection (par exemple par l'utilisation de flexibles sécurisés), la phase de lecture elle-même est relativement peu sécurisée. En effet, de nombreuses perturbations peuvent être lues, concomitamment à la phase de lecture des données de la carte magnétique. De telles perturbations peuvent être mises à profit par des personnes mal intentionnées pour tenter de modifier le comportement du terminal.

US 2011/192903 divulgue une tête magnétique dans un boîtier métallique apte à protéger contre des perturbations électromagnétique.

Ainsi, il existe un besoin de fournir une solution de sécurisation de la tête de lecture du terminal de paiement.

### 3. Résumé de l'Invention

L'invention, dans au moins un mode de réalisation, ne comprend pas ces inconvénients de l'art antérieur et comprend les caractéristiques de la revendication 1. Plus particulièrement, l'invention se rapporte à une tête magnétique, destinée à être insérée dans un terminal de paiement. La tête de lecture selon l'invention comprend une enveloppe de protection contre des perturbations électromagnétique.

Plus précisément, dans au moins un mode de réalisation de l'invention, un objectif est de fournir un dispositif de sécurisation d'une tête de lecture magnétique qui n'est pas encombrant.

L'invention se rapporte plus particulièrement à une tête de lecture magnétique, destinée à être montée dans un terminal, ladite tête étant de forme globalement parallélépipédique rectangle et comprenant une face de lecture de données issues d'une bande magnétique, ladite face comprenant au moins un composant de lecture de données issues d'une bande magnétique.

Selon un mode de réalisation particulier, ladite tête de lecture magnétique étant comprend au moins une enveloppe de protection contre des perturbations électromagnétique, ladite enveloppe étant positionnée sur au moins une face différente de ladite face de lecture.

Selon une caractéristique particulière, ladite enveloppe recouvre trois faces de ladite tête de lecture magnétique.

Ainsi, dans ce mode de réalisation, la tête de lecture magnétique définit un cône de lecture de données comprenant au moins la face de lecture de données magnétique et au moins une autre face.

Selon une caractéristique particulière, ladite enveloppe recouvre quatre faces de ladite tête de lecture magnétique. Ainsi, dans ce mode de réalisation, la tête de lecture magnétique définit un cône de lecture de données limité à la face de lecture de données magnétique.

Selon une caractéristique particulière, ladite enveloppe recouvre cinq faces de ladite tête de lecture magnétique. Ainsi, dans ce mode de réalisation, la tête de lecture magnétique définit un cône de lecture de données limité à la face de lecture de données magnétique et il n'est pas possible d'accéder à la face arrière de la tête magnétique.

Selon un mode de réalisation particulier, ladite enveloppe est constituée d'un blindage électromagnétique.

Selon un mode de réalisation particulier, ledit blindage électromagnétique est une cage de Faraday.

Selon un mode de réalisation particulier, ladite une cage de Faraday comprend au moins un circuit imprimé flexible comprenant un treillis de pistes électriques. Ainsi, une telle cage peut être aisément fabriquée postérieurement à la fabrication de la tête de lecture magnétique. Le circuit imprimé flexible peut alors être collé sur les faces de la tête magnétique.

Selon un exemple utile à la compréhension de l'invention, ladite une cage de Faraday est constituée à partir d'une couche de cuivre déposée sur les faces de ladite tête de lecture magnétique. Une tel mode de réalisation est par exemple adapté à une fabrication conjointe de la tête de lecture magnétique et de l'enveloppe de protection.

Selon un autre aspect, la technique proposée se rapporte également à un terminal de paiement comprenant au moins un ensemble de composants de lecture de données provenant d'une carte de comprenant une piste magnétique et comprenant une tête de lecture telle que décrite préalablement.

Selon l'invention, un tel terminal comprend une dans lequel ladite tête de lecture est positionnée au sein d'une ouverture d'une première paroi latérale et dans lequel une deuxième paroi latérale se trouve en vis-à-vis de la première paroi latérale pour définir une fente d'insertion d'une carte comprenant une piste de lecture magnétique. Selon l'invention la deuxième paroi latérale comprend au moins un dispositif d'isolation électromagnétique positionné en vis-à-vis de la face de lecture de la tête magnétique.

Selon une caractéristique particulière, le dispositif d'isolation électromagnétique se présente sous la forme d'un circuit imprimé flexible de largeur et de hauteur au moins égales à la largeur et la hauteur correspondante de la face de lecture de la tête magnétique.

### 4. Liste des figures

D'autres caractéristiques et avantages de l'invention apparaîtront à la lecture de la description suivante, donnée à titre d'exemple indicatif et non limitatif, et des dessins annexés, dans lesquels :
- la figure 1 présente un premier mode de réalisation d'une tête de lecture magnétique sécurisée;
- la figure 2 présente un exemple utile à la compréhension de l'invention, d'une tête de lecture magnétique sécurisée;
- la figure 3 présente un patron d'une cage de Faraday réalisée dans un circuit imprimé flexible ;
- les figures 4a et 4b exposent un mode de réalisation complémentaire associé à un dispositif d'isolation complémentaire.

### 5. Description détaillée

Sur toutes les figures du présent document, les éléments et étapes identiques sont désignés par une même référence numérique. Comme indiqué précédemment, il est nécessaire de fournir une sécurisation de la tête de lecture magnétique du terminal de paiement. Une telle sécurisation répond d'une part au besoin de limiter les nuisances engendrées par d'autres perturbations électromagnétiques qui peuvent survenir lors de la lecture des données de la carte magnétique. Une telle sécurisation répond également à la nécessité de ne pas permettre une usurpation ou un détournement des données qui sont lues par la carte magnétique. Pour ce faire, selon l'invention, on adjoint une enveloppe externe à la tête magnétique. Cette enveloppe externe a pour objectif d'isoler la tête magnétique des champs électromagnétiques qui peuvent perturber son fonctionnement. Une telle enveloppe permet notamment de limiter la tentative d'usurpation qui est rendues possible par l'architecture actuelle des têtes magnétiques et des terminaux de paiement. Selon l'invention, une tête magnétique objet de la présente divulgation se présente globalement sous la forme d'un parallélépipède rectangle. Ce parallélépipède rectangle comprend une face, légèrement bombée, comprenant les composants de lecture de la tête de lecture. Ces composants sont utilisés pour lire les informations en mesurant la polarisation de particules magnétiques (oxyde de fer) comprises dans un substrat souple. De manière usuelle ces composants peuvent être qualifiés d'électroaimant. Ils offrent la fonction de transformation du champ magnétique de la bande en champ électrique. Les signaux électriques obtenus sont convoyées jusqu'à un processeur qui se charge de les transformer en données utilisables.

Selon les normes en vigueurs, en fonction de la quantité et de l'agencement des données sur les pistes magnétiques, la tête magnétique peut comprendre une, deux ou trois électroaimants.

Selon la technique proposée, la tête magnétique est munie d'une enveloppe. Cette enveloppe assure deux fonctions distinctes. La première est de protéger la lecture des données. En effet, l'enveloppe assure une sorte de barrière autour de la tête magnétique, empêchant ainsi les perturbations électromagnétiques de venir altérer les données lues par la tête magnétique. La deuxième fonction de cette enveloppe est d'imposer une direction de lecture des données. En effet, bien que l'électroaimant (ou les électroaimants) de la tête magnétique soient théoriquement positionnés face à la piste magnétique à lire, la lecture de données par ceux-ci n'est pas nécessairement limitée à la verticale de l'électroaimant. Au contraire, l'enveloppe utilisée dans la technique proposée assure que les données ne pourront être lues qu'à la verticale de la tête magnétique ou à tout le moins dans une zone prédéfinie (de forme conique) dont le sommet est situé sensiblement au niveau du ou des électroaimants de la tête magnétique.

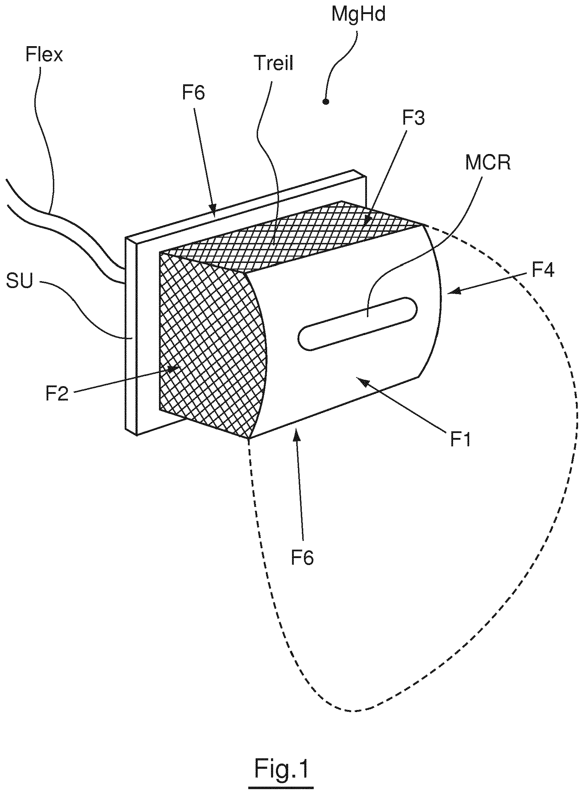

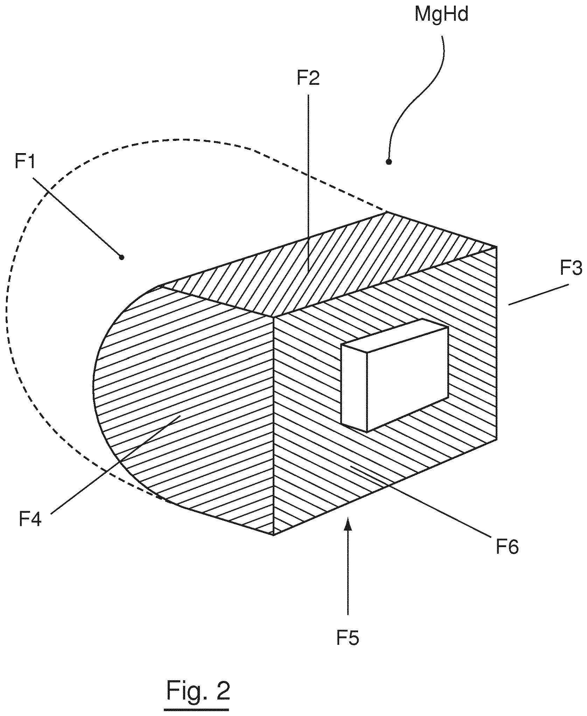

Selon la technique proposée, l'enveloppe recouvre par exemple trois côtés du parallélépipède rectangle. Plus particulièrement, comme indiqué en relation avec la figure 1 et la figure 2, la tête de lecture magnétique (MgHd) comprend six faces (F1...F6). Une de ces faces (F1) est bombée et comprend au moins un composant de lecture de piste magnétique (MCR) (par exemple un électroaimant). Cette face (F1) est nommée face avant. La tête de lecture magnétique (MgHd) comprend également une face arrière (F6). Cette face est reliée (ou connectée ou fixée) à un support de tête magnétique (Su). Le support de tête magnétique est utilisé à la fois pour connecter la tête magnétique à un circuit imprimé (par l'intermédiaire d'une nappe flexible (Flex), par exemple) et pour assurer une fixation de la tête magnétique. Les signaux électriques sont transmis par l'intermédiaire de cette nappe (Flex) au processeur (non représenté). Dans un mode de réalisation particulier, l'enveloppe recouvre trois faces de la tête magnétique (F2, F3, F4). L'enveloppe possède des propriétés d'absorption ou de déviation des rayonnements électromagnétiques. Dans un mode de réalisation particulier, l'enveloppe est un composant passif, non relié électriquement au terminal. Dans un mode de réalisation particulier, l'enveloppe est une cage de Faraday. Le cône de lecture des données par la tête de lecture est représenté, en figure 1, en pointillé. Comme exposé sur cette figure 1, comme l'enveloppe ne recouvre que trois côtés, le cône à une forme particulière. Ce mode de réalisation dans lequel seul trois côtés sont recouvert par l'enveloppe peut avoir son utilité par exemple quand une barrière électromagnétique existe déjà sur le fond du terminal de paiement. Une telle situation peut par exemple se produire lorsque l'on sécurise le terminal pour éviter une intrusion dans celui-ci. Cette sécurisation peut être réalisée par des composants qui induisent un blocage des ondes électromagnétiques, par exemple au niveau de la demi-coque inférieure du terminal : un terminal est constitué, en règle générale, d'une demi-coque inférieure et d'une demi-coque supérieure qui sont assemblées l'une avec l'autre pour former la coque du terminal. Il est fréquent que ces demi-coques comprennent des dispositifs de sécurisation qui peuvent induire une barrière électromagnétique. Dès lors, en fonction des processus de fabrication, il peut être avantageux économiquement, de ne pas poser une enveloppe sur l'ensemble de la tête magnétique.

Selon un autre mode de réalisation, la tête magnétique est recouverte d'une enveloppe sur quatre de ses faces (F2 à F5). Ce mode de réalisation est adapté à une intégration directe de l'enveloppe lors de la fabrication de la tête magnétique comme cela est décrit par la suite. Dans ce deuxième mode de réalisation, le cône représentant la plage de lecture des données par la tête magnétique est réduit (figure 2). Il n'est dès lors plus possible d'interférer avec la tête magnétique. Plus particulièrement, le volume de réception d'interférences, représenté par le cône, est réduit à la face F1, face qui est celle qui est utilisée pour lire les données de la carte magnétique. Ainsi, il est nettement plus complexe d'interférer avec la tête lors de la lecture de données de la carte magnétique. On augmente ainsi de manière simple la sécurisation de cette portion du terminal de paiement.

Selon un autre mode de réalisation, l'enveloppe recouvre deux côtés : il peut s'agir par exemple des faces latérales de la tête de lecture : une telle situation peut être avantageuse lorsque des blindages sont déjà présents dans la demi coque inférieure et la demi coque supérieure du terminal, afin par exemple de rendre celui-ci résistant aux attaques.

Selon un autre mode de réalisation, l'enveloppe recouvre un seul côté, par exemple la face arrière de la tête de lecture. Ceci est avantageux lorsque cette face arrière doit être protégée d'une émission arrière et qu'il n'est pas nécessaire de prévoir une protection particulière des autres faces. Ce cas, cependant, n'est pas rencontré de manière fréquente dans le domaine de la technique proposée (terminaux de paiement).

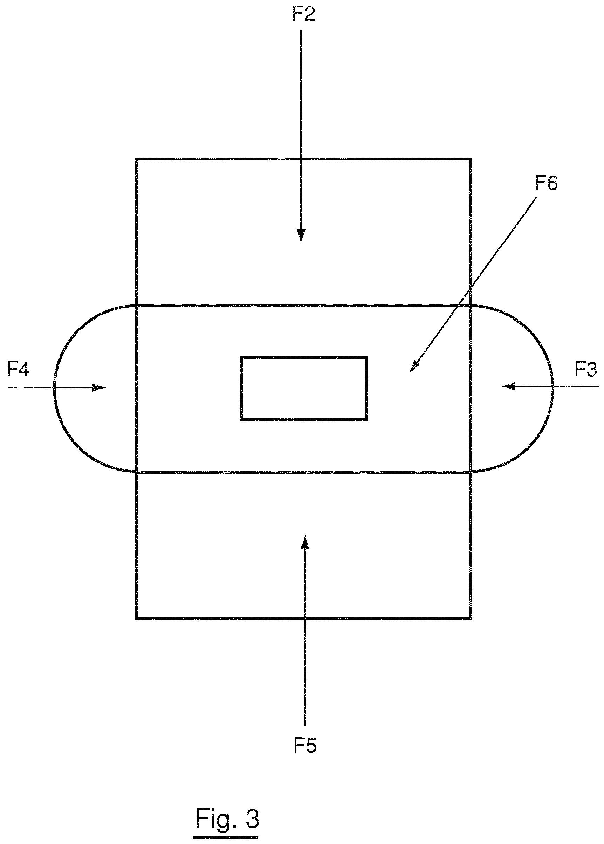

Comme indiqué plus haut, l'enveloppe recouvrant la tête magnétique peut prendre la forme d'une cage de Faraday. Dans un mode de réalisation particulier, cette cage de faraday est réalisé à l'aide d'un circuit imprimé flexible (Flex) comprenant un treillis (Treil) de pistes électriques, tel que représenté en figure 3. Le circuit imprimé flexible (Flexible) est collé à la tête magnétique postérieurement à la fabrication de celle-ci. Dans ce mode de réalisation, le circuit imprimé flexible est un composant passif. Il n'est pas relié électriquement au terminal (ou alors il n'est relié qu'à la masse de celui-ci). Dans d'autres modes de réalisation, la cage de Faraday est réalisée à l'aide d'une feuille métallique pleine, reliée à la masse et dont le patron recouvre une deux, trois, quatre ou cinq face de la tête de lecture magnétique, en fonction des besoins. Un tel mode de réalisation est adapté à la mise en oeuvre d'une enveloppe au moment de la fabrication de la tête magnétique : en effet postérieurement à la fiabilisation de celle-ci, on utilise un matériau pour recouvrir l'ensemble de la tête magnétique (comme une résine). Les trois quatre ou cinq faces à recouvrir de la tête de lecture sont alors pulvérisées d'une couche métallique (par exemple du cuivre). Les faces restantes, par exemple la face F1 et la face F6 sont alors débarrassées de la couche de résine (si nécessaire) et la tête peut être montée sur un terminal.

De manière complémentaire, afin d'assurer qu'il ne sera pas possible de transmettre des données de carte bancaires usurpées à la tête de lecture magnétique par le devant de celle-ci, une dispositif de protection supplémentaire est adjoint devant la tête magnétique, lorsque celle-ci est montée dans le terminal.

Plus particulièrement, ce dispositif d'isolation électromagnétique est utilisé pour s'assurer que seule une carte magnétique peut être utilisée pour fournir une information à la tête magnétique. Ainsi, cette technique permet, de manière complémentaire, d'éviter que des dispositifs (qui imitent les facteurs de forme des cartes à piste magnétique) soient utilisés pour transmettre frauduleusement une information à la tête magnétique du lecteur.

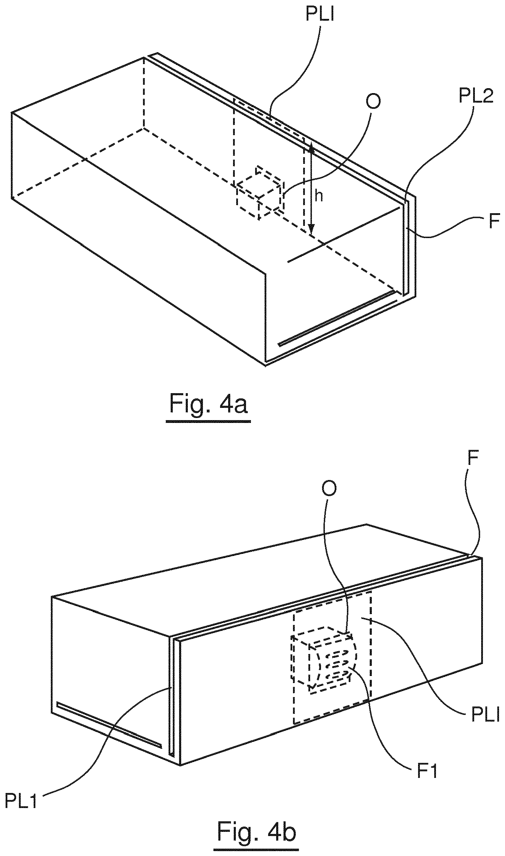

Ce mode de réalisation est décrit en relation avec les figures 4a et 4b. Dans ce mode de réalisation, en plus de l'enveloppe décrite précédemment, la première face (F1) de la tête de lecteur est protégée par un dispositif d'isolation électromagnétique. Dans ce mode de réalisation, comme de manière usuelle, la face avant de la tête de lecture (F1), de par sa forme bombée, dépasse légèrement d'une ouverture (O) prévue à cet effet. Cette protubérance de la tête magnétique dépasse dans une fente (F) qui est formée par une paroi latérale (PL1) au niveau de la tête magnétique et d'une paroi latérale (PL2) en vis-à-vis de la face avant de la tête de lecture (F1). La fente ainsi obtenue est d'une épaisseur sensiblement égale à la l'épaisseur d'une carte (normes ISO 7810 et ISO 7813).

Selon la technique proposée, afin d'éviter que des données puissent être transmises sans utiliser de carte, la paroi latérale (PL2) comprend un dispositif d'isolation électromagnétique (PLI), qui se présente par exemple sous la forme d'une plaque ou d'un circuit imprimé. Cette plaque d'isolation (PLI) permet d'empêcher la propagation des ondes électromagnétiques. Elle peut prendre plusieurs formes, Il peut s'agir d'une plaque pleine (plaque métallique). Elle est positionnée à l'intérieur d'un espace libre de la demi-coque inférieure ou de la demi-coque supérieure (selon la manière dont le terminal est construit). La hauteur *« h »* de cette plaque est au moins égale à la hauteur correspondante de la tête magnétique. Selon un mode de réalisation particulier, la taille de cette plaque est au moins égale au double de la hauteur de la tête magnétique.

Dans un mode de réalisation particulier, cette plaque est formée à l'aide d'un circuit imprimé flexible. Ce mode de réalisation présente l'avantage de ne pas nécessiter l'utilisation d'une plaque métallique pleine et peut être réalisé à moindre coût en apposant, sur le circuit imprimé, soit un treillis métallique soit une feuille de cuivre pleine.

Ce circuit imprimé flexible, tout comme la plaque, peut être relié à la masse du terminal afin de définir un potentiel déterminé. Alternativement, ce circuit imprimé flexible, tout comme la plaque, peut être relié à un processeur afin de devenir un composant actif d'élimination d'interférences électromagnétiques.

## Revendications

1. Tête de lecture magnétique (MgHd), destinée à être montée dans un terminal, ladite tête étant de forme globalement parallélépipédique rectangle et comprenant une face (F1) de lecture de données issues d'une bande magnétique, ladite face comprenant au moins un composant de lecture de données issues d'une bande magnétique, ladite tête de lecture magnétique étant **caractérisée en ce qu'**elle comprend au moins un circuit imprimé flexible (Treil) de protection contre des perturbations électromagnétique, ledit circuit imprimé flexible étant positionné sur au moins une face (F2, F3, F4, F5, F6) différente de ladite face de lecture.

2. Tête de lecture magnétique selon la revendication 1, **caractérisée en ce que** ledit circuit imprimé flexible recouvre trois faces de ladite tête de lecture magnétique.

3. Tête de lecture magnétique selon la revendication 1, **caractérisée en ce que** ledit circuit imprimé flexible recouvre quatre faces de ladite tête de lecture magnétique.

4. Tête de lecture magnétique selon la revendication 1, **caractérisée en ce que** ledit circuit imprimé flexible recouvre cinq faces de ladite tête de lecture magnétique.

5. Tête de lecture magnétique selon la revendication 1, **caractérisée en ce que** ledit circuit imprimé flexible est constitué d'un blindage électromagnétique.

6. Tête de lecture magnétique selon la revendication 4, **caractérisée en ce que** ledit blindage électromagnétique est une cage de Faraday.

7. Terminal de paiement comprenant au moins un ensemble de composants de lecture de données provenant d'une carte comprenant une piste magnétique **caractérisé en ce qu'**il comprend une tête de lecture selon l'une au moins des revendications 1 à 6.

8. Terminal de paiement selon la revendication 7, dans lequel ladite tête de lecture est positionnée au sein d'une ouverture d'une première paroi latérale (PL1) et dans lequel une deuxième paroi latérale (PL2) se trouve en vis-à-vis de la première paroi latérale (PL1) pour définir une fente (F) d'insertion d'une carte comprenant une piste de lecture magnétique, terminal **caractérisé en ce que** ladite deuxième paroi latérale (PL2) comprend au moins un dispositif d'isolation électromagnétique positionné en vis-à-vis de la face de lecture (F1) de la tête magnétique.

9. Terminal selon la revendication 8, **caractérisé en ce que** ledit dispositif d'isolation électromagnétique se présente sous la forme d'un circuit imprimé flexible de largeur et de hauteur au moins égales à la largeur et la hauteur correspondante de la face de lecture de la tête magnétique.

## Patentansprüche

1. Magnetischer Lesekopf (MgHd), der in einem Terminal montiert werden soll, wobei der Kopf eine im Allgemeinen rechteckige Parallelepipedform aufweist und eine Fläche (F1) zum Lesen von Daten von einem Magnetband umfasst, wobei die Fläche mindestens einen Bauteil zum Lesen von Daten von einem Magnetband umfasst, wobei der Magnetlesekopf **dadurch gekennzeichnet ist, dass** er mindestens eine flexible gedruckte Schaltung (Treil) zum Schutz vor elektromagnetischer Interferenz aufweist, wobei die flexible gedruckte Schaltung auf mindestens einer Fläche (F2, F3, F4, F5, F6) angeordnet ist, die sich von der Lesefläche unterscheidet.

2. Magnetlesekopf nach Anspruch 1, **dadurch gekennzeichnet, dass** die flexible gedruckte Schaltung drei Flächen des magnetischen Lesekopfs bedeckt.

3. Magnetlesekopf nach Anspruch 1, **dadurch gekennzeichnet, dass** die flexible gedruckte Schaltung vier Flächen des magnetischen Lesekopfs bedeckt.

4. Magnetlesekopf nach Anspruch 1, **dadurch gekennzeichnet, dass** die flexible gedruckte Schaltung fünf Flächen des magnetischen Lesekopfs bedeckt.

5. Magnetischer Lesekopf nach Anspruch 1, **dadurch gekennzeichnet, dass** die flexible gedruckte Schaltung aus einer elektromagnetischen Abschirmung besteht.

6. Magnetlesekopf nach Anspruch 4, **dadurch gekennzeichnet, dass** die elektromagnetische Abschirmung ein Faraday'scher Käfig ist.

7. Zahlungsterminal mit mindestens einem Satz von Datenlese-Komponenten aus einer Karte mit einem Magnetstreifen, **dadurch gekennzeichnet, dass** er einen Lesekopf nach mindestens einem der Ansprüche 1 bis 6 aufweist.

8. Zahlungsterminal nach Anspruch 7, wobei der Lesekopf innerhalb einer Öffnung einer ersten Seitenwand (PL1) positioniert ist und in der sich eine zweite Seitenwand (PL2) gegenüberliegend der ersten Seitenwand (PL1) zur Bestimmung eines Schlitzes (F) für das Einsetzen einer Karte befindet, die eine magnetische Lesespur aufweist, ein Terminal, **dadurch gekennzeichnet, dass** die zweite Seitenwand (PL2) mindestens eine Isolationsvorrichtung umfasst, die elektromagnetisch gegenüber der Lesefläche (F1) des Magnetkopfes positioniert wurde.

9. Terminal nach Anspruch 8, **dadurch gekennzeichnet, dass** die elektromagnetische Isolationsvorrichtung in Form einer flexiblen gedruckten Schaltung von Breite und Höhe mindestens gleich der Breite und der entsprechenden Höhe der Lesefläche des Magnetkopfes ist.

## Claims

1. Magnetic reading head (MgHd) to be mounted in a terminal, said head having a generally rectangular parallelepiped shape and comprising a face (F1) for reading data coming from a magnetic stripe, said face comprising at least one component for reading data coming from a magnetic stripe, said magnetic reading head being **characterized in that** it comprises at least one flexible printed circuit (Treil) for protection against electromagnetic disturbances, said flexible printed circuit being positioned on at least one face (F2, F3, F4, F5, F6) different from said reading face.

2. Magnetic reading head according to claim 1, **characterized in that** said flexible printed circuit board covers three faces of said magnetic reading head.

3. Magnetic reading head according to claim 1, **characterized in that** said flexible printed circuit board covers four faces of said magnetic reading head.

4. Magnetic reading head according to claim 1, **characterized in that** said flexible printed circuit board covers five faces of said magnetic reading head.

5. Magnetic reading head according to claim 1, **characterized in that** said flexible printed circuit board is constituted by an electromagnetic shielding.

6. Magnetic reading head according to claim 4, **characterized in that** said electromagnetic shield is a Faraday cage.

7. Payment terminal comprising at least one set of components for reading data coming from a card comprising a magnetic track and comprising a reading head according to at least one of the claims 1 to 6.

8. Payment terminal according to claim 7, wherein said reading head is positioned within an aperture of first lateral wall (PL1) and wherein a second lateral wall (PL2) is situated facing the first lateral wall (PL1) to define a slot (F) for the insertion of a card comprising a magnetic reading track, terminal **characterized in that** said second lateral wall (PL2) comprises at least one magnetic isolation device positioned so as to be facing the reading face (F1) of the magnetic head.

9. Terminal according to claim 8, **characterized in that** said electromagnetic isolation device takes the form of a flexible printed circuit board with a width and a height at least equal to the corresponding width and height of the reading face of the magnetic head.
